# EUROPÄISCHE PATENTSCHRIFT

(11) **EP 4 498 033 B1**
(45) Veröffentlichungstag und Bekanntmachung des Hinweises auf die Patenterteilung: **10.09.2025**
(21) Anmeldenummer: 24187756.2
(22) Anmeldetag: 10.07.2024
(51) Int. Cl.: G01B 11/06, G01B 11/245, G01N 21/3581, G01N 21/3586, B29C 48/09, B29C 48/92, B29C 49/42, B29C 49/80, B29C 49/04, B29C 49/78, B29L 31/00, G01N 21/90

(54) **THZ-MESSVERFAHREN UND THZ-MESSVORRICHTUNG ZUR VERMESSUNG EINER NAHTSTELLE EINES BEHÄLTERS**
THZ MEASURING METHOD AND THZ MEASURING DEVICE FOR MEASURING A SEAM OF A CONTAINER
PROCÉDÉ DE MESURE THZ ET DISPOSITIF DE MESURE THZ PERMETTANT DE MESURER UNE JONCTION D'UN RÉCIPIENT

(30) Priorität: 26.07.2023 DE 102023119780
(43) Veröffentlichungstag der Anmeldung: 29.01.2025
(73) Patentinhaber: CiTEX Holding GmbH, 49324 Melle (DE)
(72) Erfinder: Beckmann, Jan Hendrik, 49328 Melle (DE); Hildebrandt, Markus, 32545 Bad Oeynhausen (DE)
(74) Vertreter: Bremer, Ulrich

(56) Entgegenhaltungen:
- WO-A1-2019/132123
- CN-A- 116 175 939
- DE-A1- 102018 131 370
- JP-A- 2022 111 631
- US-A1- 2012 262 734

## Beschreibung

Die Erfindung betrifft ein THz-Messverfahren und eine THz- Messvorrichtung zur Vermessung eines Behälters mit einer Nahtstelle, insbesondere eines Blasform- Behälters mit einer Quetschnaht.

Behälter aus Kunststoff-Materialien werden oftmals in Blasformprozessen hergestellt, indem zunächst ein Schmelzeschlauch aus einem Kunststoff- Material extrudiert wird, der extrudierte Schmelzeschlauch mittels eines Luftstrahls ausgerichtet und von zwei Formbacken eines Werkzeugs erfasst und zusammengepresst wird. Durch die Formbacken wird ein z. B. zylindrischer mittlerer Bereich ausgebildet, weiterhin wird der Schlauch an einem oder beiden Endbereichen zusammengepresst und abgequetscht, so dass hier ein geschlossener Endbereich mit einer Quetschnaht entsteht. Die Quetschnaht ist insbesondere an der Innenfläche des Behälters ausgebildet und weist im Allgemeinen eine charakteristische Querschnittsform auf, die zu einer lokalen Verdickung des Materials führt, mit einer mittleren Einbuchtung in der Nahtstelle.

Die Qualität der Quetschnaht hängt entsprechend von den jeweiligen Produktionsbedingungen ab. So kann z. B. die Wanddicke in der gesamten Nahtstelle, oder auch in Teilen der Nahtstelle, zu dünn sein oder eine undefinierte bzw. problematische Form aufweisen, die bei mechanischen Belastungen oder unter Druck zu einer Rissbildung oder Defektstelle des Produktes führen kann. So werden Blasform-Behälter auch in sicherheitsrelevanten Bauteilen wie LNG- oder Wasserstoff-Linern von Gasflaschen eingesetzt, die zum Teil mit hohem Druck und brennbaren Materialien wie Wasserstoff oder Erdgas befüllt werden.

Eine Bewertung der Quetschnaht erfolgt im Allgemeinen rein visuell durch den Benutzer oder durch eine Kamera. Problematisch hierbei ist, dass die Quetschnaht im Allgemeinen nach außen hin relativ glatt verläuft, und die spezifische Formgebung mit den Wellen und der Einbuchtung nach innen ausgebildet wird und somit von außen schwer oder gar nicht ersichtlich ist, insbesondere bei intransparenten Kunststoff-Materialien.

Herkömmliche Methoden zur Ermittlung von Wanddicken von Kunststoffbehältern, z. B. mittels THz- bzw. Radar-Strahlung, können im Allgemeinen Schichtdicken von parallelen Grenzflächen detektieren; bei nicht-parallelen Grenzflächen wird jedoch im Allgemeinen der Strahl an einer der Grenzflächen seitlich wegreflektiert und kann somit nicht mehr erfasst werden. Dies wird bei Standard-Untersuchungen von rohrförmigen Körpern im Allgemeinen als Fehler bewertet. Bei einer Quetschnaht ist jedoch im Allgemeinen eine nicht-parallele Ausbildung insbesondere der Innenfläche durchaus ordnungsgemäß, solange die Schichtdicke nicht zu gering und die Formgebung als solche nicht problematisch ist.

DE 10 2019 132 655 A1 zeigt ein Verfahren zum Überprüfen einer Wandstärke eines Behälters aus einem zumindest teilweise transparenten Material, wobei von einer Glühwendel oder einem Glühfaden Licht im infraroten bis weißen Bereich als Emissionsspektrum entsprechend der Temperatur ausgesendet wird und auf die Wandung eines Behälters trifft, woraufhin ein optischer Detektor in Form einer Kamera das von dem Behälter reflektierte und/oder transmittierte Licht erfasst.

Zur Auswertung der Messkurve ist es möglich, eine Referenzkurve eines zweiten bekannten Merkmals mit dem Messergebnis in Beziehung zu setzen, wobei bei einem Kunststoffbehälter dies die Behälternaht oder der Boden sein kann, der in einem festen Winkelverhältnis zu den zu vermessenden Designelementen steht.

DE 10 2017 125 753 A1 zeigt eine THz-Messvorrichtung und ein THz-Messverfahren zum Messen einer Wanddicke eines rohrförmigen Messobjektes, wobei ein THz-Hauptsensor und ein THz-Zusatzsensor an verschiedenen Positionen um das rohrförmige Messobjekt positioniert sind, um Wanddicken-Verformungen, z.B. Exzentrizitäten, als Reflexionen zu erfassen.

Aus DE 10 2008 052 611 B3 ist ein Verfahren zur Herstellung von Kunststoffhohlkörpern durch Blasformen bekannt, bei dem aus einer Kunststoffschmelze ein Vorformling mit einem sich in einer Längsrichtung ändernden Wandprofil gebildet wird, der in einem Blasformprozess nachfolgend als Kunststoffhohlkörper ausgebildet wird, wobei seine Wanddicke zur Regelung gemessen wird.

DE 10 2018 124 175 A1 zeigt ein Verfahren und eine Vorrichtung zum Steuern einer Produktionsanlage für plattenförmige oder strangförmige Körper, bei dem der Körper entlang einer Förderrichtung durch einen Messbereich gefördert wird, wobei der Körper in dem Messbereich mittels Messstrahlung im Gigahertz- oder Terahertz-Frequenzbereich bestrahlt wird und die Messstrahlung zumindest teilweise in den Körper eindringt, wobei von dem Körper reflektierte Messstrahlung detektiert und der Brechungsindex des Körpers und/oder die Absorption durch den Körper bestimmt wird.

WO 2019/132123 A1 beschreibt eine Vorrichtung und ein Verfahren für eine nicht-destruktive, kontaktlose Vermessung von Komposit-Strukturen mittels Terahertz-Wellen, wobei tomografische Informationen von Kompositstrukturen mit hoher Genauigkeit unter Verwendung eines dreidimensionalen, verstellbaren mehrgelenkigen Roboters erfasst werden.

CN 116175939A beschreibt ein Steuersystem für eine Blasformmaschine und ein entsprechendes Steuerungsverfahren. Das Steuersystem kombiniert automatische Steuerung und automatische Einstellung, um verschiedene Daten einer ausgebildeten Flaschenwand einer Kunststoff-Flasche aus z. B. PP, PE, PET, PC oder PP zu überwachen. Somit können Daten während des Prozesses ermittelt und Abweichungen sofort erkannt werden. Hierbei ist eine Heizeinheit zum Vorheizen einer Vorform vorgesehen, mit einer Heizkammer, einem Heiztisch innerhalb der Heizkammer zum Laden bzw. Aufnehmen der Vorform, und einer Heizlampen-Gruppe in der Heizkammer. Die Heizlampen-Gruppe ist mit der Heizkammer über einen Teleskop-Mechanismus verbunden, um die Vorform in einer entsprechenden Höhe zu heizen. Die Heizeinheit ist auch mit einem Förderband zum Ausgeben der Vorform nach dem Heizvorgang versehen.

JP 2022111631 A beschreibt eine Überwachungsvorrichtung zum Überwachen von Defekten in einer Ausgangslinie einer Vorrichtung zum Verformen. Hierbei wird das geformte Produkt mit einer Beleuchtungseinrichtung beleuchtet und ein Bild aufgenommen, wobei die Bildaufnahmeeinrichtung in einem speziellen Winkel gegenüber der Beleuchtungseinrichtung vorgesehen ist. Das so ermittelte Bild wird nachfolgend ausgewertet.

US 2012/0262734 A1 zeigt ein System zum Messen einer Naht einer Dose, wobei die Naht eine Umfangslinie, eine Oberseite und einen Boden aufweist. Das System weist einen Tisch mit einer Oberseite, einer Einpresseinrichtung zum Ausüben eines leichten Drucks auf die Wand, eine Einrichtung zum Rotieren der Dose und eine Messeinrichtung zum Messen einer Verstellung auf.

DE 10 2018 131 370 A1 zeigt ein Messsystem zum Vermessen eines Messobjektes, insbesondere eines Kunststoffprofils, mit einer Antennenordnung aus mehreren THz-Transceivern, die jeweils zeitweise aktiv einen THz-Sendestrahl aussenden und zeitweise passiv reflektierte THz-Strahlung aufnehmen, einer Verstelleinrichtung zum Verstellen der Antennenanordnung in mehrere Messpositionen entlang einer Verstellrichtung, sowie eine Steuer- und Auswerteeinrichtung zur Aufnahme und Auswertung der Messsignale aus den mehreren Messpositionen, wobei ein SAR-Auswerteverfahren vorgesehen ist und ein virtuelles Modell der Grenzflächen des Messobjektes ausgebildet wird.

Der Erfindung liegt somit die Aufgabe zugrunde, ein THz-Messverfahren und eine THz-Messvorrichtung zur Vermessung eines Behälters mit Nahtstellen zu schaffen, die eine sichere Vermessung mit relativ geringem Aufwand ermöglichen.

Diese Aufgabe wird durch ein THz-Messverfahren und eine THz-Messvorrichtung nach den unabhängigen Ansprüchen gelöst. Die Unteransprüche beschreiben bevorzugte Weiterbildungen. Weiterhin ist ein Verfahren zum Herstellen und Vermessen eines Blasform-Behälters vorgesehen. Das erfindungsgemäße Messverfahren kann insbesondere mit der erfindungsgemäßen Messvorrichtung durchgeführt werden.

Erfindungsgemäß wird somit mindestens ein THz-Sensor, der insbesondere auch als Radar-Sensor ausgebildet sein kann, relativ zu dem zu untersuchenden Behälterbereich, insbesondere dem Endbereich des Blasform-Behälters, verstellt, so dass aus dieser Untersuchung eine Vielzahl von Datensätzen gewonnen wird, die sich insbesondere aus den Messsignalen des Sensors, der jeweiligen Position des Sensors relativ zu dem Behälterbereich sowie der Ausrichtung der optischen Achse des Sensors relativ zu dem Behälterbereich zusammensetzen.

Aus diesen Datensätzen, die somit vorzugsweise Daten-Tupel aus den jeweiligen Positionsdaten, Ausrichtungsdaten und Messsignalen des THz-Sensors, gegebenenfalls auch noch weiteren Daten, darstellen, kann nachfolgend eine Bewertung der Nahtstelle erfolgen, bei der insbesondere folgende relevante Eigenschaften der Nahtstelle ermittelt werden:
eine Länge der Nahtstelle entlang ihrer Längsrichtung,
ein Schichtdickenprofil der Nahtstelle, insbesondere quer zur Nahtstelle und/oder entlang der Nahtstelle,
eine Breite der Nahtstelle in einer Querrichtung quer zu ihrer Längsrichtung, eine Wellen-Wanddicke mindestens einer an einer Innenfläche ausgebildeten Welle,
eine Rest-Wanddicke in einer Vertiefung zwischen zwei Wellen,
ein Nahtwinkel der Nahtstelle an der Innenfläche in einer Vertiefung zwischen zwei Wellen.

Erfindungsgemäß wird insbesondere erkannt, dass die Nahtstelle zur Innenfläche hin kussmundartig ausgebildet sein kann, mit zwei Bereichen höherer Schichtdicke, insbesondere wellenförmigen Bereichen höherer Schichtdicke, und einer dazwischenliegenden Vertiefung. Grundsätzlich kann eine derartige kussmundartige Ausbildung als ordnungsgemäß erkannt werden, wenn die Schichtdicke hinreichend groß ist und durch die Vertiefung keine zu spitzwinklige Ausbildung erreicht wird, da bei mechanischen Belastungen und insbesondere bei einer Druckbelastung von innen her unsymmetrische Kräfte, insbesondere Scherkräfte, auftreten können, die die Nahtstelle derartig belasten, dass die Naht beschädigt, geschwächt oder sogar geöffnet wird. So kann z. B. ein von innen auf eine zu spitzwinklige Vertiefung wirkender Druck die Naht in diesem Bereich derartig auf Spannung belasten bzw. Scherkräfte ausüben, dass eine Rissbildung und Zerstörung der Naht einsetzen kann.

Somit werden einige Vorteile erreicht. So ist eine Vermessung mit relativ geringem Aufwand möglich, da hier insbesondere die relative Position des Behälterbereichs und des Sensors einzustellen sind, mit einer vordefinierten relativen Verstellung. Hierbei wird erkannt, dass diese relative Verstellung durch vorprogrammierte Daten erfolgen kann, was mit relativ geringem Aufwand möglich ist. Die relative Verstellung kann auf unterschiedliche Weise erfolgen. Vorteilhaft ist insbesondere die Verstellung des THz-Sensors relativ zu dem festen Behälter, da hierfür der Behälter in einer Aufnahmevorrichtung fest aufgenommen und der Sensor demgegenüber vordefiniert verstellt wird, z. B. durch einen Roboterarm, der den Sensor entlang einer vordefinierten Bahn führt, unter fortlaufender Vermessung durch den THz-Sensor. Insbesondere eine derartige Ausbildung mit einem Roboterarm ermöglicht eine schnelle und sichere Führung, mit unterschiedlichen Positionen und unterschiedlichen Ausrichtungen der optischen Achse des THz-Sensors.

Grundsätzlich kann lediglich ein THz-Sensor verstellt werden, weiterhin können jedoch auch mehrere THz-Sensoren gleichzeitig verstellt werden und hierdurch eine schnelle Untersuchung ermöglichen.

Alternativ hierzu sind auch Vermessungen mit z. B. der Verstellung des Sensors in einer Schiene möglich. Weiterhin kann auch der Behälter relativ zu dem Sensor verstellt werden, indem die Verstellvorrichtung den Behälterbereich relativ zu einer festen Sensoranordnung verstellt. Die feste Sensoranordnung kann insbesondere mit mehreren Sensoren ausgebildet werden, die z.B. unterschiedlich orientiert sind.

Gemäß einer besonders bevorzugten Ausbildung gibt der THz-Sensor nicht-parallele Strahlung, insbesondere divergente oder konvergente Strahlung aus, d. h. mit einem Öffnungswinkel des Strahlenbündels. Insbesondere die Ausgabe von divergenter Strahlung, d. h. einem sich nach außen öffnendem Strahlenkegel, ist hier vorteilhaft. Hierdurch wird die Aussendung von Strahlen ermöglicht, die zu einer Reflexion an Stellen der Grenzflächen führen, die gegenüber der optischen Achse des THz-Sensors nicht-senkrecht ausgerichtet sind. Somit kann können Reflexionen von unterschiedlichen Stellen der Naht erfasst werden, auch z.B. von Messpositionen mit flacherem Einfallswinkel aus, bei denen der THz-Sensor keine Reflexionen der Außenfläche erfasst. Eine direkte Zuordnung der Reflexionen des Strahlenkegels zu einer Grenzfläche ist aus den einzelnen Messungen im Allgemeinen nicht möglich, wobei z.B. auch mehrere unterschiedliche Stellen der Quetschnaht gleichzeitig reflektieren können. Es wird erfindungsgemäß jedoch erkannt, dass durch die Vielzahl von Messungen an den unterschiedlichen Positionen mit unterschiedlichen Ausrichtungen nachfolgend eine sichere Ermittlung möglich ist.

Die Ermittlung kann gemäß einer bevorzugten Ausbildung nach dem Prinzip der synthetischen Radar-Apertur SAR ermittelt werden, die ansonsten bei einer Höhenvermessung von Flugzeugen bekannt ist. Derartige SAR-Ermittlungen werden insbesondere von Flugobjekten wie Flugzeugen oder Satelliten aus vorgenommen und ermöglichen eine zweidimensionale Darstellung eines Geländeausschnitts. Erfindungsgemäß wird erkannt, dass ein derartiges, zur Geländevermessung von Flugzeugen aus verwendetes Auswerteverfahren im vorliegenden Fall auch für die Vermessung einer Quetschnaht vorteilhaft ist.

Weitere Verfahren der Bewertung der Quetschnaht sind neuronale Netze oder Deep Learning, weiterhin künstliche Intelligenz (Artificial Intelligence). Hierbei können insbesondere zunächst Vermessungen von ordnungsgemäßen Quetschnähten erfolgen, und weiterhin Vermessungen von nicht-ordnungsgemäßen Quetschnähten, so dass in einem Lernprozess aus den umfangreichen Datensätzen ermittelt bzw. erlernt werden kann, welche Nähte als ordnungsgemäß und nicht-ordnungsgemäß zu bewerten sind.

Die Vermessung eines Behälters kann somit erfolgen, indem ein z. B. im Wesentlichen zylindrischer Behälter zunächst in einer Aufnahme derartig positioniert wird, dass sein Endbereich für die Vermessung frei liegt, und über den Bereich der Nahtstelle die Vermessung erfolgt, indem ein THz-Sensor oder mehrere THz-Sensoren in Trajektorien über die Nahtstelle geführt werden, insbesondere dreidimensional bzw. nicht lediglich in einer Messebene, und die so gewonnenen Datensätze ausgewertet werden, so dass als Ergebnis eine Bewertung als Fehlersignal als "ordnungsgemäß - nicht-ordnungsgemäß" ausgegeben wird.

Hierbei kann einer oder mehrere der vorliegenden Vergleiche erfolgen: ein Vergleich der Schichtdicke der Welle oder der beiden Wellen mit einem unteren Grenzwert und/oder oberen Grenzwert,
ein Vergleich der Schichtdicke der Vertiefung mit einem unteren Grenzwert, ein Vergleich der Vertiefungs-Schichtdicke mit einer Behälterschichtdicke in dem Bereich außerhalb der Quetschnaht,
eine Bewertung des Naht-Öffnungswinkels bzw. Nahtwinkels mit einem unteren Grenzwert, zur Ermittlung spitzwinkliger Kantenausbildungen zwischen den Wellen, die zu unzulässigen Belastungen führen können.

Somit ist mit geringem Aufwand eine vielfältige Vermessung möglich, die weiterhin in einem Selbstlernverfahren fortlaufend verbessert werden kann.

Die Erfindung wird im Folgenden anhand der beiliegenden Zeichnungen an einigen Ausführungsformen näher erläutert. Es zeigen:
- Fig. 1: die Vermessung eines Behälterbodens mit Quetschnaht durch eine THz-Messvorrichtung gemäß einer Ausführungsform;
- Fig. 2: die Unteransicht des Behälters aus Fig. 1 mit der Quetschnaht;
- Fig. 3: einen Schnitt durch eine ordnungsgemäße Quetschnaht; und
- Fig. 4: einen Schnitt durch eine nicht ordnungsgemäße Quetschnaht.

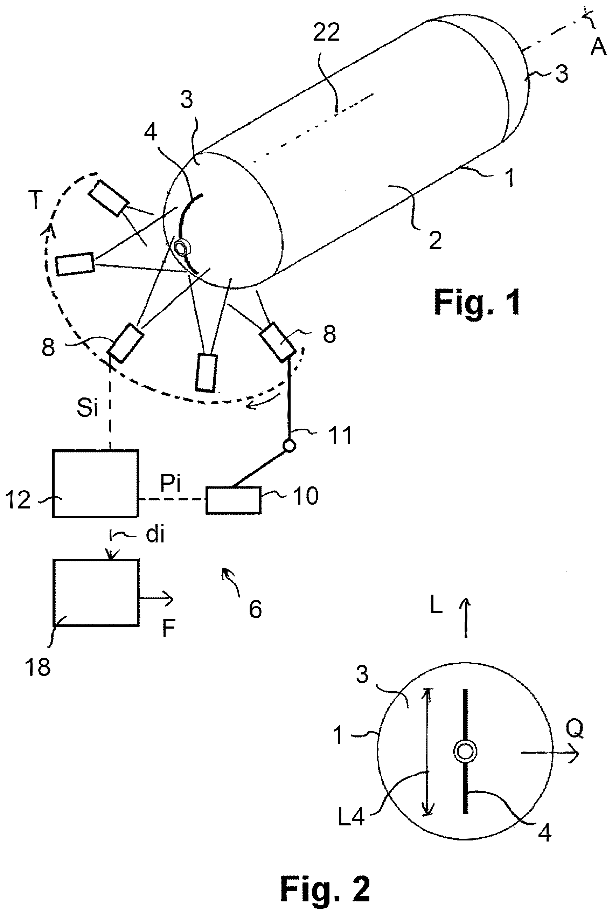

In Figur 1 ist ein Behälter 1 aus Kunststoff gezeigt, der z. B. einen Inliner für einen Wasserstoff-Tank bildet. Der Behälter 1 weist z. B. einen zylindrischen mittleren Teil 2 und zwei abgerundete Endbereiche 3 auf. In den Endbereichen 3 ist jeweils eine Quetschnaht 4 ausgebildet, die sich im Allgemeinen entlang einer Längsrichtung L erstreckt. Der Endbereich 3 mit der Quetschnaht 4 wird durch eine THz-Messvorrichtung 6 vermessen, die aufweist: einen oder mehrere verstellbare THz-Sensoren 8, eine Verstelleinrichtung 10, die hier einen gelenkigen Roboterarm 11 zur Verstellung des THz-Sensors 8 entlang einer Trajektorie T aufweist, eine Steuereinrichtung 12 und eine Auswerteeinheit 18. In Fig. 1 wird somit ein einziger THz-Sensor 8 entlang der Trajektorie T verstellt, in unterschiedliche Positionen Pi mit unterschiedlichen Ausrichtungen Oi seiner optischen Achse B. Der THz-Sensor 8 führt insbesondere während der Verstellung fortlaufend Messungen aus. Die Trajektorie ist insbesondere nicht lediglich kreisförmig mit einer Ausrichtung der optischen Achse B des Sensors 8 auf einen konstanten Mittelpunkt, sondern derartig ausgebildet, dass die Quetschnaht 4 aus unterschiedlichen Positionen und Richtungen vermessen wird. Hierbei wird vorzugsweise eine Trajektorie ausgebildet, die sich nicht nur in einer Messebene erstreckt, sondern eine dreidimensionale Bahn bildet; der THz-Sensor 8 kann z.B. mehrmals über die Quetschnaht 4 geführt werden. In der schematischen Darstellung der Figur 1 ist der THz-Sensor 8 deutlich kleiner als der Behälter 1 gezeigt; es kann jedoch auch ein größerer THz-Sensor 8 verstellt werden.

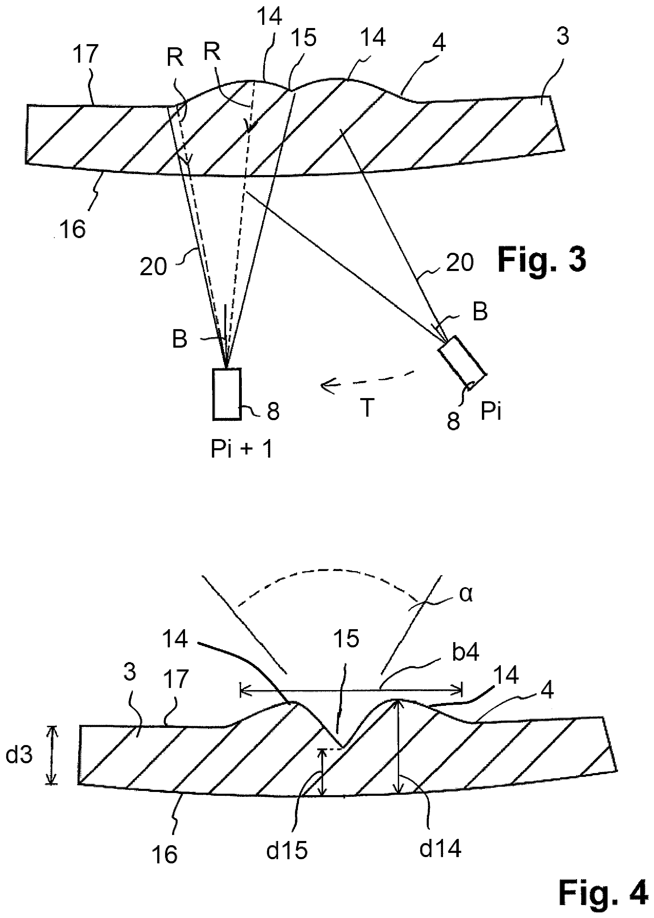

Der Behälter 2 wird durch ein Blasform-Verfahren, insbesondere ein Blasform -Extrusionsverfahren hergestellt, bei dem die Endbereiche 3 durch Formbacken ausgebildet werden. Hierzu wird als Ausgangsmaterial z. B. ein Kunststoffgranulat, z. B. ein Polyamid oder ein Polyethylen, aufgeschmolzen und über einen Ringspalt extrudiert, so dass ein Schmelzeschlauch aus dem geschmolzenen Kunststoff-Material ausgegeben wird, z. B. kontinuierlich oder zeitlich unterbrochen. Der Schmelzeschlauch wird zur Ausbildung des Behälters 2 dann in einer äußeren Form aufgenommen, durch von innen aufgeblasen und gegen die äußere Form gedrückt. Die Endbereiche 3 werden nachfolgend ausgebildet, indem hier jeweils zwei Formbacken von außen nach innen geschlossen werden, hierdurch die z. B. halbrunden Endbereiche 3 ausbilden und den Schmelzeschlauch abquetschen. In dem mittleren Bereich der Endbereiche 3, wo die Formbacken zusammenstoßen und den Schmelzeschlauch abquetschen, wird die Quetschnaht 4 ausgebildet, die beispielhaft in den Schnittdarstellungen der Figuren 3 und 4 gezeigt ist.

Der Behälter 1 kann insbesondere ein Inliner für einen Wasserstoff-Behälter sein, der zunehmend in Wasserstoff-Technologien eingesetzt wird, z. B. in wasserstoffbetriebenen Fahrzeugen und Bussen oder zum Transport. Der Inliner nachfolgend verstärkt werden, z. B. durch Umwickeln mit Kohlenfasermatten; grundsätzlich muss der Behälter 1 jedoch bereits eine hohe Wasserstoff-Dichtigkeit und Druckbeständigkeit aufweisen. Als Kunststoff-Material kann insbesondere ein Polyamid oder Polyethylen gewählt werden, das hinreichend wasserstoffdicht ist und durch ein Blasformverfahren geformt werden kann.

Figur 3 zeigt eine ordnungsgemäße Quetschnaht 4 in dem Endbereich 3, wobei in Fig. 3 die Außenfläche 16 des Endbereichs 3 unten und die Innenfläche 17 oben dargestellt ist. Die Quetschnaht 4 wird somit im Wesentlichen nach innen, d. h. zum Behälterinneren hin, ausgebildet, so dass ihre Formgebung im Allgemeinen von außen nicht oder nicht eindeutig ersichtlich ist, und auch eine Vermessung von außen schwierig ist. Die Quetschnaht 4 wird In dem Bereich, wo die Klemmbacken bzw. Formbacken zusammengedrückt werden, ausgebildet und bildet eine kussmundartige Form mit typischerweise zwei Wellen 14 und einer zwischen den Wellen ausgebildeten Vertiefung 15. Gemäß Figur 3 führen die Wellen 14 zu einer Querschnitts-Verdickung, so dass eine Wanddicke d zunimmt; somit bildet der Endbereichs 3 bzw. Behälterboden außerhalb der Quetschnaht 4 eine Endbereich-Wanddicke d3, in den Wellen 14 jeweils eine Wellen-Wanddicke d14, und in der Vertiefung 15 eine Rest-Wanddicke d15.

Die bei der Vermessung der Quetschnaht relevanten Größen sind insbesondere in Fig. 4 gezeigt. Bei der ordnungsgemäßen Quetschnaht 4 der Fig. 3 ist die Wellen-Wanddicke d14 größer als die Endbereichs-Wanddicke d3 und bildet insbesondere einen Maximalwert der Wanddicke d, und auch die Rest-Wanddicke d15 in der Vertiefung 15 ist größer als die Endbereichs-Wanddicke d3, so dass die Quetschnaht 4 zunächst keine Schwächung des Endbereichs 3 darstellt. Weiterhin bildet die Vertiefung 15 einen stumpfen Nahtwinkel alpha zwischen den Wellen 14 aus, insbesondere einen Nahtwinkel alpha oberhalb eines Grenzwertes alpha_th, so dass auch bei einer Belastung des geschlossenen Behälters 1 von innen durch einen hohen Innendruck die auftretenden Kräfte bzw. Scherkräfte im Bodenbereich 3 nicht zu einer Rissbildung führen.

Figur 4 zeigt eine nicht-ordnungsgemäße Quetschnaht 4, bei der zum einen die Vertiefung 15 tiefer verläuft, sodass z.B. die Rest-Wanddicke d15 unterhalb eines Grenzwertes d15_th liegt, der z.B. durch den Wert der Endbereich-Wanddicke d3 gegeben ist. Weiterhin wird eine Schwächung des Endbereichs 3 ausgebildet, indem die Vertiefung 15 einen - gegenüber Figur 3 - spitzeren Nahtwinkel alpha an der Innenfläche 17 des Endbereichs 3 ausbildet, der z.B. unterhalb eines Grenzwertes alpha_th liegt. Somit kann bei einer Beaufschlagung mit einem hohen Innendruck eine Rissbildung im Bereich der Vertiefung 15 auftreten, da der Innendruck an den schrägen Flächen der Wellen 14 Scherkräfte ausbildet, die die Vertiefung 15 auf Zug belasten können. Sowohl die geringe Rest-Wanddicke d15 als auch der große Nahtwinkel alpha stellen Fehler dar, die bei Erkennen durch die Auswerteeinrichtung 18 zu einem Fehlersignal F führen

Die Vermessung der Wanddicke d im zylindrischen Bereich 2 kann durch ein herkömmliches THz-Messverfahren zum Vermessen von Strängen und zylindrischen Gegenständen erfolgen, da die zylindrische Wand - idealerweise - konzentrisch zu einer mittleren Achse A ausgebildet ist und somit THz-Sensoren senkrecht auf die Achse ausgerichtet werden können. THz-Strahlung wird somit an Schichtgrenzen, hier somit der Außenfläche 16 und Innenfläche 17 des zylindrischen mittleren Bereichs 2, reflektiert, so dass die Wanddicken aus den THz-Messsignalen ermittelt werden können. Eine Vermessung der Quetschnaht 4 ist durch ein derartiges Verfahren mit einer Laufzeitmessung, bei der in einem THz-Messsignal Reflexionspeaks der Innenfläche 17 und Außenfläche 16 ermittelt werden und der Abstand zwischen diesen beiden Reflexionspeaks die Schichtdicke wiedergibt, nicht möglich, da die Innenfläche 17 der Quetschnaht 4 nicht definiert und parallel zu der Außenfläche verläuft. Somit kann z. B. in Figur 3 und Figur 4 von unten ein THz-Sensor 8 zwar senkrecht zu der Außenfläche 16, d. h. der Behälterboden-Unterseite, angeordnet werden, hier senkrecht eingestrahlte THz-Strahlung 8 wird jedoch an den Wellen 14 und der Vertiefung 15 im Allgemeinen seitlich wegreflektiert.

Erfindungsgemäß erfolgt eine detaillierte Vermessung der Quetschnaht 4 durch die in Figur 1 gezeigte THz-Messvorrichtung 6, bei der
- zum einen der mindestens eine THz-Sensor 8 einen geeignete Abstrahlkegel 20 der THz-Strahlung 19 aufweist, insbesondere wie in Fig. 1, 3 und 4 gezeigt als divergenter Abstrahlkegel 20, und
- zum anderen die Verstellvorrichtung 10, d.h. hier der Roboterarm 11, den THz-Sensor 8 entlang der vordefinierten Trajektorie T in die vordefinierten Messpositionen Pi verstellt. So werden z.B. auch Positionen wie die rechte Position Pi der Fig. 3 eingenommen, in der die optische Achse B nicht senkrecht auf die Außenfläche 16 gerichtet ist, aber die Quetschnaht 4 von dem Strahlenkegel 20 erfasst wird. In Fig. 3 ist die Verstellung von der Position Pi in die Position Pi+1 angedeutet.

Der THz-Sensor 8 kann in jeder Messung lediglich senkrecht zurückreflektierte THz-Strahlung R detektieren. Wie in Fig. 4 gezeigt ist, können aufgrund des divergenten Abstrahlkegels 20 unterschiedliche Bereiche, die nicht auf der jeweiligen optischen Achse B des THz-Sensors 8 liegen, erfasst werden. Von dem THz-Sensor 8 werden somit Messsignale Si aufgenommen, die jeweils für sich noch keine Darstellung der Quetschnaht 4 entsprechend Figur 3 oder Figur 4 ermöglichen. Durch die Vielzahl von Messungen des THz- Sensors 8, unter Einbeziehung sowohl der Abstrahlcharakteristik als auch der Position und Winkelausrichtung entlang der Trajektorie T, wird jedoch eine nachträgliche Modell-Erstellung ermöglicht.

Der mindestens eine THz-Sensor 8 gibt seine Messsignale Si an die Steuereinrichtung 12 aus, die auch die Verstelleinrichtung 10 ansteuert und die jeweiligen Positionen Pi des THz-Sensors 8 entlang der Trajektorie T einstellt. Somit können die Messsignale Si den jeweiligen Positionsdaten Pi des THz-Sensors 8 entlang der Trajektorie T zugeordnet werden.

Indem die Verstelleinrichtung 10 einen Roboterarm 11 aufweist, können eine Vielzahl von Positionen Pi und Winkelausrichtungen bzw. Orientierungen des THz-Sensors 8 gemäß den vorgegebenen Daten eingestellt werden, insbesondere unter fortlaufender Verstellung und Aufnahme der Messsignale Si. So kann - anders als bei einer Verstellung auf einer festen Kreisbahn bzw. Schiene - die Quetschnaht 4 von unterschiedlichen Winkeln und Abständen zu dem Behälter-Endbereich 3 bzw. Behälterboden her erfasst werden.

Alternativ hierzu ist z. B. auch die Führung des THz-Sensors 8 entlang einer Schiene möglich. Weiterhin kann die Relativverstellung zwischen THz-Sensor 8 und Behälter-Endbereich 3 auch durch Verstellung des Behälter-Endbereichs 3 bei fester oder auch beweglicher Anordnung des THz- Sensors 8 möglich, z.B. mit einer hohen Anzahl von THz-Sensoren 8 in unterschiedlichen Positionen. Weiterhin sind auch kombinierte Verstellungen von Behälter 1 und THz-Sensor 8 möglich.

Die Steuereinrichtung 12 gibt nachfolgend Datensätze di aus den Messsignalen Si und dazugehörigen Positionssignalen Pi, einschließlich der Ausrichtung, an die Auswerteeinheit 18, die diese Daten bewertet und hieraus die relevanten Werte der Quetschnaht 4 ermittelt. Hierbei wird die Quetschnaht 4 in ihrer Längsrichtung L und Querrichtung bewertet, wobei die Formgebung der Wellen 14 und der Vertiefung 15 bewertet wird und z.B. die Werte d3, d15, d14, alpha, b4 ermittelt und mit Grenzwerten verglichen werden.

Bei dieser Bewertung durch die Auswerteeinheit 18 kann insbesondere eine synthetische Radar-Apertur (SAR) verwendet werden. Derartige SAR-Ermittlungen werden insbesondere von Flugobjekten wie Flugzeugen oder Satelliten aus vorgenommen und ermöglichen eine zweidimensionale Darstellung eines Geländeausschnitts. Somit wird ein Modell M erstellt, das dann bewertet wird. Weiterhin kann z.B. ein neuronales Netz, deep learning bzw. künstliche Intelligenz verwendet werden.

Somit wird eine Vielzahl von Daten erfasst, von denen jede Messung alleine keine weitere Auswertung ermöglicht; durch Einbeziehung der Messdaten entlang der Trajektorie T kann jedoch nachfolgend eine Modellierung oder Bewertung der Quetschnaht 4 erfolgen, z. B. durch SAR. Bei der SAR- Vermessung sendet der THz-Sensor 8 jeweils hinreichend große Abstrahlkegel 20 aus, so dass sich die Abstrahlkegel 20 aus den verschiedenen Messpositionen überlagern. Da die Messpositionen Pi des THz-Sensors 8 bekannt sind, insbesondere bei einer Verstellrichtung (Azimut-Richtung) am Messobjekt vorbei, überlagern sich die Messbilder bei bekannten Positionen Pi. Es wird somit das Objekt im Zielgebiet unter veränderlichem Blickwinkel eingestrahlt und entsprechend detektiert. Aus der Intensität und vorzugsweise Phasenlage der empfangenen Radarechos, d.h. der Reflexionsstrahlen R, kann die Apertur einer großen Antenne synthetisiert werden und hierdurch eine hohe Ortsauflösung und Bewegungsrichtung der Antenne erzielt werden. Hierbei können durch einen Radarsignal- Prozessor in der Auswerteeinheit 18 die einzelnen Amplituden und Phasenlagen derartig miteinander verbunden werden, dass ein großes Bild als virtuelles Modell, z. B. als Höhenprofil der Quetschnaht 4 und des Behälterbodens 3, synthetisiert wird. Durch die SAR- Auswertealgorithmen können auch die Phasen der empfangenen Signale korrigiert werden, wobei auch Laufzeitunterschiede zwischen einzelnen Antennenpositionen korrigiert und somit die trigonometrischen Verhältnisse berücksichtigt werden können. Laufzeitunterschiede können hierbei als Phasenunterschiede gemessen werden.

Gemäß weiterer Ausführungsformen kann ein selbstlernendes Verfahren, insbesondere eine künstliche Intelligenz (AI) und/oder ein neuronales Netz eingesetzt werden. Bei neuronalen Netzen können Gut-Schlecht-Kriterien eingelernt werden und hierdurch der örtliche und zeitliche Signalverlauf der Signale bewertet werden.

Somit können an dem Behälterboden 3 ermittelt werden:
der Wanddickenverlauf und Wanddicke im Bereich der Vertiefung 15 und der Wellen 14, z.B. als Schichtdickenprofil Sp, weiterhin der Nahtwinkel alpha, die Wanddicken d3, d14, d15, die Breite b4 und Länge L4 der Quetschnaht 4.

Der THz-Sensor 8 kann insbesondere THz-Strahlung im Frequenzbereich von 10 GHZ bis 50 THz, insbesondere 10 GHZ bis 10 THZ, insbesondere 20 GHz oder 50 bis 5THZ vorzugsweise 50GHz bis 5 THz ausgeben und detektieren. Die THz-Strahlung kann als frequenzmodulierte Strahlung, insbesondere FMCW - Radar (frequency modulated continous wave radar) oder kontinuierlich oder zeitlich unterbrochene Strahlung, z. B. auch gepulste bzw. pulsförmige THz-Strahlung, ausgegeben werden.

Alternativ zu der gezeigten divergenten Strahlencharakteristik kann auch eine fokussierende Strahlencharakteristik eingesetzt werden, wodurch ebenfalls ein nicht-paralleler Strahlenkegel 20 ausgebildet werden kann.

Weiterhin kann an dem Behälter 1 oder einem extrudierten Behälter auch eine Formschlussnaht 22 an einem mittleren Bereich, z.B. dem zylindrischen Bereich 2, vermessen werden. Die Formschlussnaht 22 entsteht in dem Bereich, an dem der von innen aufgeblasene Schmelzeschlauch in den Grenzbereich zwischen den Formhälften gelangt und hierdurch eine Unregelmäßigkeit aufweisen kann. Auch derartige Formschlussnähte 22 können entsprechend vermessen werden.

### Bezugszeichenliste

- 1: Behälter
- 2: zylindrischer mittlerer Bereich
- 3: Endbereich
- 4: Quetschnaht im Endbereich 3
- 6: THz-Messvorrichtung
- 8: THz-Sensor, Radarsensor
- 10: Verstelleinrichtung
- 11: Roboterarm als Teil der Verstelleinrichtung 10
- 12: Steuereinrichtung
- 14: Welle, Materialerhebung
- 15: Vertiefung zwischen Wellen 14
- 16: Außenfläche
- 17: Innenfläche
- 18: Auswerteeinheit
- 19: THz-Strahlung
- 20: nicht-paralleles Strahlenbündel, insbesondere Abstrahlkegel
- 22: Formschlussnaht
- A: Symmetrieachse des Behälters 1
- alpha: Nahtwinkel in der Quetschnaht 4
- B: optische Achse des THz-Sensors 8
- di: Datensätze
- F: Fehlersignal
- Si: Messsignal in den Positionsdaten Pi
- SP: Schichtdickenprofil
- Pi: Positionsdaten des Sensors 8 relativ zu dem Behälter 1
- L: Längsrichtung der Quetschnaht 4
- Q: Querrichtung der Quetschnaht 4

- b4: Breite der Quetschnaht 4
- d3: Endbereich-Wanddicke des Endbereichs 3
- d14: Wellen-Wanddicke
- d15: Rest-Wanddicke in der Vertiefung 15
- L4: Länge der Quetschnaht 4 in Längsrichtung L

## Patentansprüche

1. THz-Messverfahren zur Vermessung eines Behälters (1) mit einer Nahtstelle (4), insbesondere eines Blasform-Behälters (2) mit einer Quetschnaht (4),
mit mindestens folgenden Schritten:
- Positionieren eines Behälterbereichs (3), der aus einem für eine THz-Strahlung (19) transparenten Material gebildet ist und eine Nahtstelle (4) aufweist, und
- relative Verstellung mindestens eines THz-Sensors (8) gegenüber dem Behälterbereich (3) in mehrere Positionen (Pi) mit zumindest teilweise unterschiedlichen Ausrichtungen der optischen Achse (B) des THz-Sensors (8),
- in den mehreren Positionen (Pi) Aussenden von THz-Strahlung (19) als nicht-paralleles Strahlenbündel (20) von dem THz-Sensor (8) entlang seiner optischen Achse (B) auf den Behälterbereich (3) und Detektion von an der Innenfläche (17) und der Außenfläche (16) des Behälterbereichs (3) teilreflektierter THz-Strahlung (R) durch den THz-Sensor (8) und Bildung von Datensätzen (di) aus den Messsignalen (Si) und Positionsdaten (Pi) mit den Ausrichtungen,
- Auswertung der Datensätze (di), wobei eine oder mehrere der folgenden Eigenschaften der Nahtstelle (4) ermittelt werden:
eine Länge (L4) der Nahtstelle (4) in ihrer Längsrichtung (L),
eine Breite (b4) der Nahtstelle (4) in einer Querrichtung (Q) quer zu der Längsrichtung (L),
ein Schichtdickenprofil (Sp) der Schichtdicke (d) in der Längsrichtung (L) und der Querrichtung (Q),
eine Wellen-Wanddicke (d14) von einer oder zwei an einer Innenfläche (17) ausgebildeten Wellen (14),
eine Rest-Wanddicke (d15) in einer Vertiefung (15) zwischen zwei Wellen (14),
ein Nahtwinkel (alpha) der Nahtstelle (4) an der Innenfläche (17) in einer Vertiefung (15) zwischen zwei Wellen (14).

2. THz-Messverfahren nach Anspruch 1, **dadurch gekennzeichnet, dass** zumindest eine der ermittelten Eigenschaften mit einem Grenzwert verglichen wird, in Abhängigkeit des Vergleichs die Nahtstelle (4) als ordnungsgemäß oder fehlerhaft bewertet wird und in Abhängigkeit der Bewertung ein Fehlersignal (F) ausgegeben wird.

3. THz-Messverfahren nach Anspruch 2, **dadurch gekennzeichnet, dass** einer oder mehrere der folgenden Vergleiche durchgeführt werden und in Abhängigkeit des Vergleichs das Fehlersignal (F) ausgegeben wird:
ein Vergleich der Schichtdicke (d14) der Welle (14) mit einem unteren Grenzwert und/oder einem oberen Grenzwert,
ein Vergleich der Schichtdicke (d15) der Vertiefung (15) mit einem unteren Grenzwert,
ein Vergleich der Schichtdicke (d15) der Vertiefung (15) mit der Behälterbereichs-Wanddicke (d3) außerhalb der Nahtstelle (4),
ein Vergleich des Nahtwinkels (alpha) mit einem unteren Grenzwert,
zur Ermittlung spitzwinkliger Vertiefungsausbildungen zwischen den Wellen (14).

4. Messverfahren nach einem der vorherigen Ansprüche, **dadurch gekennzeichnet, dass** als Behälter ein Blasform-Behälter (3) und als Nahtstelle eine Quetschnaht (4), insbesondere kussmundartige Quetschnaht (4), in einem Endbereich (3) des Blasform-Behälters (1) vermessen wird,
wobei die Quetschnaht (4) an der Innenfläche (17) des Endbereichs (3) in ihrer Querrichtung zwei Wellen (14) und eine zwischen den Wellen (14) ausgebildete Vertiefung (15) aufweist.

5. THz-Messverfahren nach einem der vorherigen Ansprüche, **dadurch gekennzeichnet, dass** weiterhin ermittelt wird
eine Behälterbereichs-Wanddicke (d3) des Behälters (1) in einem Behälterbereich (3) außerhalb der Nahtstelle (4), wobei
das Schichtdickenprofil (Sp), die Wellen-Wanddicke (d14) und/oder die Rest-Wanddicke (d15) verglichen werden mit der Behälterbereichs-Wanddicke (d3).

6. THz-Messverfahren nach einem der vorherigen Ansprüche, **dadurch gekennzeichnet, dass** ein Brechungsindex (n) des Kunststoffmaterials des Behälters (1) bei der Bewertung der Eigenschaften der Nahtstelle (4) mit herangezogen wird.

7. THz-Messverfahren nach einem der vorherigen Ansprüche, **dadurch gekennzeichnet, dass** bei der Bewertung und/oder Ermittlung eines oder mehrere der folgenden Verfahren herangezogen werden:
eine synthetische Apertur SAR, ein neuronales Netz, ein Deep Learning-Verfahren, ein Artificial Intelligence-Verfahren (AI), ein Vergleich mit gespeicherten Messdaten ordnungsgemäßer Behälter (1).

8. THz-Messverfahren nach einem der vorherigen Ansprüche, **dadurch gekennzeichnet, dass** der THz-Sensor (8) entlang einer Trajektorie (T) geführt wird, insbesondere mittels eines Roboterarms (11), und kontinuierlich oder in diskreten Positionen Messungen durchführt, wobei in der Trajektorie (T) unterschiedliche Positionen (Pi) und die Ausrichtungen des THz-Sensors (8) eingestellt werden, wobei die Trajektorie (T) zumindest teilweise verläuft:
- dreidimensional und/oder in mehreren Ebenen und/oder
- nicht oder nicht nur in einer schraubenförmigen Bahn, und/oder
- in der Querrichtung (Q) senkrecht zur Längsrichtung (L) der Nahtstelle (4), und/oder
- mit Ausrichtungen der optischen Achse (B) auf unterschiedliche Punkte des Behälterbereichs (3) und/oder unterschiedliche Achsen des Behälterbereichs (3).

9. THz-Messverfahren nach einem der Ansprüche 1 bis 7, **dadurch gekennzeichnet, dass** die THz-Messvorrichtung (6) statisch angeordnet ist und der Behälter (1) durch eine Verstelleinrichtung relativ zu der THz-Messvorrichtung verstellt wird.

10. THz-Messverfahren nach einem der vorherigen Ansprüche, **dadurch gekennzeichnet, dass** in zumindest einer Position (Pi) des THz-Sensors (8) Reflexionsstrahlen (R) aufgenommen werden
- aus unterschiedlichen Winkeln relativ zu der optischen Achse (B), und/oder
- aus unterschiedlichen Bereichen der Innenfläche (17) der Nahtstelle (4), und/oder
- von einer Stelle der Innenfläche (17) im Bereich der Nahtstelle (4) ohne Reflexionsstrahlen an der Außenfläche (16)
- von einer Stelle der Innenfläche (17) im Bereich der Nahtstelle (4) und von der Außenfläche (16) außerhalb der Nahtstelle (4),
bei einer Ausrichtung der optischen Achse (B) des THz-Sensors (8) nicht-senkrecht zur Außenfläche (16) des Behälterbereichs (3).

11. THz-Messverfahren nach einem der vorherigen Ansprüche, **dadurch gekennzeichnet, dass** bei der Auswertung die Nahtstelle (4) selbsttätig erkannt wird, insbesondere als Profilausbildung an der Innenfläche (17) des Behälters (1) in einer Querrichtung (Q) mit zwei benachbarten Wellen (14) und einer zwischen diesen liegenden Vertiefung (15).

12. THz-Messverfahren nach einem der vorherigen Ansprüche, **dadurch gekennzeichnet, dass** die THz-Strahlung (19) ausgegeben wird:
- als Laufzeitmessung, frequenzmodulierte Strahlung, insbesondere FMCW-Radarstrahlung, und/oder gepulste Strahlung, und/oder
- im Frequenzbereich von 10 GHZ bis 50 THz, insbesondere 10 GHZ bis 10 THZ, insbesondere 20 GHz oder 50 GHz bis 5THz.

13. THz-Messvorrichtung (6) zur Vermessung eines Behälters (1) mit einer Nahtstelle (4), insbesondere eines Blasform-Behälters mit einer Quetschnaht (4), wobei die THz-Messvorrichtung (6) aufweist:
einen THz-Sensor (8), der eingerichtet ist, ein nicht-paralleles Strahlenbündel (20) entlang seiner optischen Achse (B) auszugeben, reflektierte THz-Strahlung (R) zu detektieren und ein Messsignal (Si) auszugeben,
eine Verstellvorrichtung (10) zur Verstellung des mindestens einen THz-Sensors (8) in vorgegebene Positionen (Pi) und Ausrichtungen der optischen Achse (B) relativ zu einem Behälter (1),
eine Steuereinrichtung (12), die eingerichtet ist, die Messsignale (Si) aufzunehmen und Datensätze (di) aus den Messsignalen (Si), Positionsdaten (di) der Verstellvorrichtung (10) und Ausrichtungsdaten des THz-Sensors (8) zu bilden,
- eine Auswerteeinheit (18), die eingerichtet ist, aus den Datensätzen (di) eine oder mehrere der folgenden Eigenschaften der Nahtstelle (4) zu ermitteln:
eine Länge (L4) der Nahtstelle (4) in ihrer Längsrichtung (L),
eine Breite (b4) der Nahtstelle (4) quer zu ihrer Längsrichtung (L),
ein Schichtdickenprofil (Sp) der Schichtdicke (d) in einer Längsrichtung (L) der Nahtstelle (4) und in einer Querrichtung quer zur Längsrichtung (L),
eine Wellen-Wanddicke (d14) einer an einer Innenfläche (17) ausgebildeten Welle (14) der Quetschnaht (4),
eine Rest-Wanddicke (d15) in einer Vertiefung (15) zwischen den Wellen (14),
einen Nahtwinkel (alpha) der Nahtstelle (4) an der Innenfläche (17) zwischen den Wellen (14).

14. THz-Messvorrichtung (6) nach Anspruch 13,
**dadurch gekennzeichnet, dass** die Verstellvorrichtung (10) einen Roboterarm (11), insbesondere einen mehrgelenkigen Roboterarm (11) aufweist, der von der Steuereinrichtung (12) angesteuert wird, den mindestens einen THz-Sensor (8) entlang einer Trajektorie (T) mit unterschiedlichen Positionen (P1) und unterschiedlichen Ausrichtungen zu verstellen.

15. Verfahren zum Herstellen und Vermessen eines Blasform-Behälters (1), bei dem
ein Schmelzeschlauch aus einem Kunststoff-Material, z. B. Polyamid, extrudiert wird,
aus dem Schmelzeschlauch in einem Blasformverfahren ein Blasform-Behälter (1) mit einem runden Bodenbereich (3) hergestellt wird, wobei beim Abtrennen des Schmelzeschlauchs eine Quetschnaht (4) ausgebildet wird, und
nachfolgend die Quetschnaht (4) mit einem THz-Messverfahren nach einem der Ansprüche 1 bis 12 und/oder einer THz-Messvorrichtung (6) nach Anspruch 13 oder 14 vermessen wird, und
in Abhängigkeit der Messung ein Fehlersignal (X) ausgegeben wird, wenn eine fehlerhafte Quetschnaht (14) ermittelt wird.

## Claims

1. THz measuring method for measuring a container (1) with a joint (4), in particular, a blow mould container (2) with a pinch-off seam (4), including at least the following steps:
- positioning a container area (3) made of a material transparent for a THz radiation (19) and having a joint (4), and
- relative adjustment of at least one THz sensor (8) in relation to the container region (3) in multiple positions (Pi) with at least partially different orientations of the optical axis (B) of the THz sensor (8),
- in the multiple positions (Pi), emitting THz radiation (19) as a non-parallel beam bundle (20) from the THz sensor (8) along its optical axis (B) towards the container region (3) and detecting THz radiation (R) partially reflected on the interior surface (17) and the exterior surface (16) of the container area (3) by the THz sensor (8), and creating data sets (di) from the measuring signals (Si) and position data (Pi) with the orientations,
- evaluating the data sets (di), where one or more of the following characteristics of the joint (4) are determined:
a length (L4) of the joint (4) in its longitudinal direction (L),
a width (b4) of the joint (4) in a transverse direction (Q) perpendicular to the longitudinal direction (L),
a layer thickness profile (Sp) of the layer thickness (d) in the longitudinal direction (L) and the transverse direction (Q),
a ripple wall thickness (d14) of one or two ripples (14) formed on an interior surface (17),
a residual wall thickness (d15) in an indentation (15) between two ripples (14),
a joint angle (alpha) of the joint (4) on the interior surface (17) in an indentation (15) between two ripples (14).

2. THz measuring method according to claim 1, **characterised in that** at least one of the characteristics determined is compared with a threshold value, the joint (4) is evaluated as correct or incorrect depending on the comparison, and an error signal (F) is put out depending on the evaluation.

3. THz measuring method according to claim 2, **characterised in that** one or more of the following comparisons are made and the error signal (F) is put out depending on the comparison:
a comparison of the layer thickness (d14) of the ripple (14) with a lower threshold value and/or an upper threshold value,
a comparison of the layer thickness (d15) of the indentation (15) with a lower threshold value,
a comparison of the layer thickness (d15) of the indentation (15) with the container area wall thickness (d3) outside the joint (4),
a comparison of the joint angle (alpha) with a lower threshold value, to determine acute-angled indentations formed in-between the ripples (14).

4. Measuring method according to one of the above claims, **characterised in that** a blow mould container (3) is measured as the container, and a pinch-off seam (4), in particular, kissing mouth shaped pinch-off seam (4), is measured as the joint in an end region (3) of the blow mould container (1),
where the pinch-off seam (4) comprises two ripples (14) and an indentation (15) formed in-between the ripples (14) on the interior surface (17) of the end region (3) in its transverse direction.

5. THz measuring method according to one of the above claims, **characterised in that,** further a container area wall thickness (d3) of the container (1) in a container region (3) outside the joint (4) is determined, where the layer thickness profile (Sp), the ripple wall thickness (d14) and/or the residual wall thickness (d15) are compared with the container area wall thickness (d3).

6. THz measuring method according to one of the above claims, **characterised in that** a refraction index (n) of the plastic material of the container (1) is supplementary utilized when evaluating the characteristics of the joint (4).

7. THz measuring method according to one of the above claims, **characterised in that** upon evaluating and/or determining one or more of the following methods are utilized:
a synthetic aperture SAR, a neural network, a deep learning method, an artificial intelligence method (AI), a comparison with stored measuring data or correct containers (1).

8. THz measuring method according to one of the above claims, **characterised in that** the THz sensor (8) is guided along a trajectory (T), in particular, by means of a robotic arm (11), and
the THz sensor (8) carries out measurements continuously or in discrete positions, where in the trajectory (T) various positions (Pi) and the orientation of the THz sensors (8) are adjusted, where the trajectory (T) extends, a t least in part:
- three-dimensionally and/or in multiple planes and/or
- not or not exclusively in a helical path, and/or
- in the transverse direction (Q) perpendicular to the longitudinal direction (L) of the joint (4), and/or
- with orientations of the optical axis (B) towards different points of the container area (3) and/or different axes of the container area (3).

9. THz measuring method according to one of the claims t through 7, **characterised in that** the THz measuring device (6) is arranged stationary, and the container (1) is adjusted relative to the THz measuring device by means of an adjustment means.

10. THz measuring method according to one of the above claims, **characterised in that** in at least one position (Pi) of the THz sensor (8) reflected beams (R) are picked up
- from different angles relative to the optical axis (B), and/or
- from different areas of the interior surface (17) of the joint (4), and/or
- from a point of the interior surface (17) in the area of the joint (4) without reflected beams on the exterior surface (16)
- from a point of the interior surface (17) in the area of the joint (4) and from the exterior surface (16) outside the joint (4),
at an orientation of the optical axis (B) of the THz sensor (8) that is not perpendicular to the exterior surface (16) of the container area (3).

11. THz measuring method according to one of the above claims, **characterised in that** upon evaluating the joint (4) is recognized automatically, in particular, as a profile formed on the interior surface (17) of the container (1) in a transverse direction (Q) with two adjacent ripples (14) and an indentation (15) lying between these two.

12. THz measuring according to one of the above claims, **characterised in that** the THz radiation (19) is put out:
- as a time-of-flight measurement, frequency modulated radiation, in particular, FMCW radar radiation, and/or pulsed radiation, and/or
- in a frequency range between 10 GHZ and 50 THz, in particular, 10 GHZ and 10 THz, in particular, 20 GHz or 50 GHz and 5 THz.

13. THz measuring device (6) for measuring of a container (1) with a joint (4), in particular, a blow mould container with a pinch-off seam (4), the THz measuring device (6) comprising:
a THz sensor (8), adapted to emit a non-parallel beam bundle (20) along its optical axis (B), to detect reflected THz radiation (R), and to put out a measuring signal (Si),
an adjustment device (10) for adjusting the at least one THz sensor (8) in pre-defined positions (Pi) and aligning the optical axis (B) relative to a container (1),
a controller means (12) adapted to receive the measuring signals (Si) and to create data sets (di) from the measuring signals (Si), position data (di) of the adjustment device (10) and orientation data of the THz sensor (8),
- an evaluation unit (18) adapted to determine one or more of the following characteristics of the joint (4) from the data sets (di):
a length (L4) of the joint (4) in its longitudinal direction L),
a width (b4) of the joint (4) perpendicular to its longitudinal direction (L),
a layer thickness profile (Sp) of the layer thickness (d) in a longitudinal direction (L) of the joint (4) and in a transverse direction perpendicular to the longitudinal direction (L).
a ripple wall thickness (d14) of a Welle (14) of the pinch-off seam (4) formed on an interior surface (17),
a residual wall thickness (d15) in an indentation (15) between the ripples (14),
a joint angle (alpha) of the joint (4) on the interior surface (17) between the ripples (14).

14. THz measuring device (6) according to claim 13,
**characterised in that** the adjustment device (10) comprises a robotic arm (11), in particular, a multi-articular robotic arm (11), which is controlled by the controller means (12) to adjust the at least one THz sensor (8) along a trajectory (T) with different positions (P1) and different orientations.

15. Method for manufacturing and measuring a blow mould container (1),
wherein
a molten tube is extruded from a plastic material, e.g., polyamide, from the molten tube a blow mould container (1) with a round bottom area (3) is made in a blow moulding process, where a pinch-off seam (4) is formed upon cutting off the molten tube and
subsequently, the pinch-off seam (4) is measured using a THz measuring method according to one of the claims 1 through 12 and/or a THz measuring device according claim 13 or 14, and
depending on the measurement, an error signal is put out if a faulty pinch-off seam (4) is determined.

## Revendications

1. Procédé de mesure THz pour mesurer un récipient (1) avec une jonction (4), en particulier d'un récipient moulé par soufflage (2) avec une soudure par pincement (4), comprenant au moins les étapes suivantes :
- positionnement d'une zone du récipient (3) fabriquée dans un matériau transparent au rayonnement THz (19) et présentant une jonction (4), et
- déplacement relatif d'au moins un capteur THz (8) par rapport à la zone du récipient (3) en plusieurs positions (Pi) avec des orientations au moins partiellement différentes de l'axe optique (B) du capteur THz (8),
- dans les plusieurs positions (Pi), émission de rayonnement THz (19) sous forme d'un faisceau lumineux (20) par le capteur THz (8) le long de son axe optique (B) sur la zone du récipient (3), détection par le capteur THz (8) du rayonnement THz (R) partiellement réfléchi au niveau de la surface interne (17) et de la surface externe (16) de la zone du récipient (3), et formation d'ensembles de données (di) à partir des signaux de mesure (Si) et des données de position (Pi) avec les orientations,
- Exploitation des ensembles de données (di), où au moins une des propriétés suivantes de la jonction (4) est déterminée :
une longueur (L4) de la jonction (4) dans une direction longitudinale (L),
une largeur (b4) de la jonction (4) dans une direction perpendiculaire (Q) perpendiculaire à la direction longitudinale (L),
un profil d'épaisseur de couche (Sp) de l'épaisseur de couche (d) dans la direction longitudinale (L) et dans la direction perpendiculaire (Q),
une épaisseur de paroi de vague (d14) d'une ou deux vagues (14) formées sur une surface interne (17),
une épaisseur de paroi au repos (d15) dans un creux (15) entre deux vagues (14),
un angle de soudure (alpha) de la jonction (4) sur la surface interne (17) dans un creux (15) entre deux vagues (14).

2. Procédé de mesure THz selon la revendication 1, **caractérisé en ce qu'au** moins une des propriétés déterminées est comparée à une valeur limite, en fonction de la comparaison la jonction (4) est évaluée conforme ou non conforme, et en fonction de l'évaluation, un signal d'erreur (F) est émis.

3. Procédé de mesure THz selon la revendication 2, **caractérisé en ce qu'**au moins une des comparaisons suivantes est effectuée et en fonction de la comparaison, le signal d'erreur (F) est émis :
une comparaison de l'épaisseur de couche (d14) de la vague (14) avec une valeur limite inférieure et/ou une valeur limite supérieure,
une comparaison de l'épaisseur de couche (d15) du creux (15) avec une valeur limite inférieure,
une comparaison de l'épaisseur de couche (d15) du creux (15) avec une épaisseur de paroi de la zone du récipient (d3) hors de la jonction (4),
une comparaison de l'angle de soudure (alpha) avec une valeur limite inférieure pour déterminer des formations de creux à angle aigu entre les vagues (14).

4. Procédé de mesure THz selon l'une des revendications précédentes, **caractérisé en ce qu'**en tant que récipient, on mesure un récipient moulé par soufflage (2) et en tant que jonction, on mesure une soudure par pincement (4), en particulier une soudure à lèvres (4), dans une zone terminale (3) du récipient moulé par soufflage (1),
la soudure par pincement (4) présentant sur la surface interne (17) de la zone terminale (3) dans sa direction transversale deux vagues (14) et un creux (15) formé entre les vagues (14).

5. Procédé de mesure THz selon l'une des revendications précédentes, **caractérisé en ce qu'**on détermine en outre une épaisseur de paroi de zone de récipient (d3) du récipient (1) dans une zone de récipient (3) hors de la jonction (4), où on compare le profil d'épaisseur de couche (Sp), l'épaisseur de paroi de vague (d14) et/ou l'épaisseur de paroi au repos (d15) à l'épaisseur de paroi de la zone de récipient (d3).

6. Procédé de mesure THz selon l'une des revendications précédentes, **caractérisé en ce qu'**on fait intervenir un indice de réfraction (n) du matériau plastique du récipient (1) lors de l'évaluation des propriétés de la jonction (4).

7. Procédé de mesure THz selon l'une des revendications précédentes, **caractérisé en ce que** lors de l'évaluation et/ou de la détermination d'au moins un des procédés suivants, on fait appel à :
une ouverture synthétique SAR, un réseau neuronal, un procédé de deep learning, un procédé d'intelligence artificielle (IA), une comparaison avec des données de mesure enregistrées d'un récipient conforme (1).

8. Procédé de mesure THz selon l'une des revendications précédentes, **caractérisé en ce que** le capteur THz (8) est guidé le long d'une trajectoire (T), en particulier au moyen d'un bras robotisé (11), et des mesures sont effectuées en continu ou à des positions discrètes, différentes positions (Pi) sur la trajectoire (T) et l'orientation du capteur THz (8) étant configurées où la trajectoire (T) parcourt au moins partiellement :
- une trajectoire tridimensionnelle et/ou dans plusieurs plans et/ou
- en tout ou partie hélicoïdale, et/ou
- dans la direction perpendiculaire (Q) perpendiculairement à la direction longitudinale (L) de la jonction (4), et/ou
- avec des orientations de l'axe optique (B) en différents points de la zone du récipient (3) et/ou différents axes de la zone du récipient (3).

9. Procédé de mesure THz selon l'une des revendications 1 à 7, **caractérisé en ce que** le dispositif de mesure THz (6) est disposé de façon statique et le récipient (1) est déplacé par un dispositif de déplacement par rapport au dispositif de mesure THz.

10. Procédé de mesure THz selon l'une des revendications précédentes, **caractérisé en ce que** des rayons réfléchis (R) sont enregistrés en au moins une position (Pi) du capteur THz (8)
- sous différents angles par rapport à l'axe optique (B), et/ou
- depuis différentes zones de la surface interne (17) de la jonction (4), et/ou
- depuis un emplacement de la surface interne (17) dans la zone de la jonction (4) sans rayons réfléchis sur la surface externe (16)
- depuis un emplacement de la surface interne (17) dans la zone de la jonction (4) et depuis la surface externe (16) hors de la jonction (4), avec une orientation de l'axe optique (B) du capteur THz (8) non perpendiculaire à la surface externe (16) de la zone du récipient (3).

11. Procédé de mesure THz selon l'une des revendications précédentes, **caractérisé en ce que** lors de l'évaluation, on reconnaît automatiquement la jonction (4), en particulier en tant que formation de profil sur la surface interne (17) du récipient (1) dans une direction perpendiculaire (Q) avec deux vagues voisines (14) et un creux (15) situé entre elles.

12. Procédé de mesure THz selon l'une des revendications précédentes, **caractérisé en ce que** le rayonnement THz (19) est émis :
- en tant que mesure de temps de vol, rayonnement à modulation de fréquence, en particulier rayonnement radar FMCW, et/ou rayonnement pulsé, et/ou
- dans une gamme de fréquences de 10 GHz à 50 THz, en particulier de 10 GHz à 10 THz, en particulier 20 GHz ou de 50 GHz à 5 THz.

13. Dispositif de mesure THz (6) pour mesurer un récipient (1) avec une jonction (4), en particulier d'un récipient moulé par soufflage avec une soudure par pincement (4), le dispositif de mesure THz (6) comportant :
un capteur THz (8) conçu pour émettre un faisceau lumineux non parallèle (20) le long de son axe optique (B), pour détecter un rayonnement THz (R) réfléchi et pour émettre un signal de mesure (Si),
un dispositif de déplacement (10) pour déplacer l'au moins un capteur THz (8) dans des positions (Pi) et orientations prévues de l'axe optique (B) par rapport à un récipient (1),
un dispositif de commande (12) conçu pour enregistrer les signaux de mesure (Si) et pour former des ensembles de données (di) à partir des signaux de mesure (Si), de données de position (di) du dispositif de déplacement (10) et de données d'orientation du capteur THz (8),
une unité d'évaluation (18) conçue pour déterminer à partir des ensembles de données (di) au moins une propriété de la jonction (4) :
une longueur (L4) de la jonction (4) dans une direction longitudinale (L),
une largeur (b4) de la jonction (4) perpendiculairement à la direction longitudinale (L),
un profil d'épaisseur de couche (Sp) de l'épaisseur de couche (d) dans une direction longitudinale (L) de la jonction (4) et dans une direction perpendiculaire à la direction longitudinale (L),
une épaisseur de paroi de vague (d14) d'une vague (14) de la soudure par pincement (4) formée sur une surface interne (17),
une épaisseur de paroi au repos (d15) dans un creux (15) entre les vagues (14),
un angle de soudure (alpha) de la jonction (4) sur une surface interne (17) entre les vagues (14).

14. Dispositif de mesure THz (6) selon la revendication 13, **caractérisé en ce que** le dispositif de déplacement (10) comporte un bras robotisé (11), en particulier un bras robotisé (11) à plusieurs articulations commandé par le dispositif de commande (12) pour déplacer l'au moins un capteur THz (8) le long d'une trajectoire (T) avec différentes positions (P1) et différentes orientations.

15. Procédé de fabrication et de mesure d'un récipient moulé par soufflage (1), dans lequel
un tuyau en matière fondue constitué d'un matériau plastique, p. ex. polyamide, est extrudé,
un récipient moulé par soufflage (1) est fabriqué à partir du tuyau en matière fondue dans un procédé de soufflage avec une zone de fond ronde (3), au cours de quoi une soudure par pincement (4) se forme lors du détachement du tuyau en matière fondue, et
ensuite, la soudure par pincement (4) est mesurée par un procédé de mesure THz selon l'une des revendications 1 à 12 et/ou avec un dispositif de mesure THz (6) selon la revendication 13 ou 14, et
un signal d'erreur (X) est émis en fonction de la mesure si une soudure par pincement (4) défectueuse est mise en évidence.
